# EUROPEAN PATENT APPLICATION

(11) **EP 1 515 508 A2**
(43) Date of publication of application: **16.03.2005**
(21) Application number: 04002795.5
(22) Date of filing: 09.02.2004
(51) Int. Cl.: H04L 29/06

(54) **Session control system, communication terminal and servers**

(30) Priority: 09.09.2003 JP 2003316186
(71) Applicant: Hitachi, Ltd., Chiyoda-ku, Tokyo 101-8010 (JP)
(72) Inventor: Sakamoto, Kenichi, Hitachi, Ltd., Chiyoda-ku, Tokyo 100-8220 (JP); Yumoto, Kazuma, Hitachi, Ltd., Chiyoda-ku, Tokyo 100-8220 (JP); Kawai, Eri, Hitachi, Ltd., Chiyoda-ku, Tokyo 100-8220 (JP); Kiyoto, Satoshi, Hitachi, Ltd., Chiyoda-ku, Tokyo 100-8220 (JP)
(74) Representative: Beetz & Partner Patentanwälte

(57) **Abstract**

A SIP server (1) having the function of accepting simultaneous IPv4/IPv6 registrations from an IPv4/IPv6 dual SIP terminal (5-7), recognizing a protocol communicable with a communication partner terminal, and notifying the IPv4/IPv6 dual SIP terminals of the result of the recognition if necessary, thereby to allow VoIP communication between the IPv4/IPv6 dual SIP terminal and an IPv4 terminal or an IPv6 terminal to be the communication partner.

## Description

### BACKGROUND OF THE INVENTION

### (1) Field of the Invention

The present invention relates to a session control system, a terminal apparatus, and a network system each on the Internet and, more particularly, to a SIP (Session Initiation Protocol) server for performing a SIP process, a SIP terminal system, and a network system applying them.

### (1) Description of the Related Art

With the prevalence of the Internet, there has been a growing demand for a communication service on the Internet. Voice communication that has been implemented conventionally over a telephone network has also been implemented on the Internet. Voice communication on the Internet (VoIP) is performed after a terminal session is established in accordance with the H.323 or the SIP (Session Initiation Protocol). In particular, the SIP has been increasingly prevalent as a de-fact standard for a session control function on the Internet and expanded increasingly such that it is used not only for voice communication but also for the transmission and reception of contents including instant messaging and a presence service.

On the other hand, there has begun the prevalence of the IPv6 (Internet Protocol version 6) as an infrastructure for implementing a higher-level application in response to an increase in the number of Internet subscribers.

With the increasing prevalence of the IPv6, an IPv4 network, an IPv6 network, and an IPv4/IPv6 dual network for transferring each of IPv4/IPv6 packets will coexist and, on such networks, IPv4 information communication terminals. and IPv6 information communication terminals will also coexist.

In relation to voice communication between the IPv4 information communication terminal and the IPv6 information communication terminal, a method using a SIP-application-level gateway (ALG) and a network address translator (NAT) has been known as described in the second article of "A Study of the IPv4/IPv6 dual SIP interworking method using a DNS-ALG," 2003 IEICE General Conference B-6-157 (Non-Patent Document 1). In accordance with the method, the SIP-ALG function performs the conversion of IPv4 and IPv6 session control functions and the NAT function performs the conversion of a voice signal. It is necessary for the SIP-ALG and the NAT to operate in cooperation during session control. Specifically, it is necessary to distribute an IPv4/IPv6 conversion table from the SIP-ALG to the NAT on the establishment of a session.

Under the situation where the IPv4 network, the IPv6 network and the IPv4/IPv6 dual network coexist, an IPv4 SIP server, an IPv6 SIP server and an IPv4/IPv6 dual SIP server also coexist as SIP servers each providing a session control function. Further, as session control terminals accommodated to the SIP servers, there exist IPv4 information communication terminals IPv6 information communication terminals, and IPv4/IPv6 dual information communication terminals in mixed relation.

A conventional IPv4/IPv6 dual information communication terminal is capable of calling and being called with an address registered at the time of registration. If a registration to a SIP server is made based on the IPv4, therefore, it is possible to call an IPv4 information communication terminal or an IPv4/IPv6 dual information communication terminal registered based on the IPv4 and to be called from the IPv4 information communication terminal or from the IPv4/IPv6 dual information communication terminal registered based on the IPv4. However, it has been difficult to call an IPv6 information communication terminal and to be called from the IPv6 information communication terminal. Likewise, it is also difficult for an IPv4/IPv6 dual information communication terminal registered based on the IPv6 to call an IPv4 information communication terminal and to be called from an IPv4 information communication terminal.

### SUMMARY OF THE INVENTION

Although such a problem can be solved by using the SIP-ALG and NAT mentioned above, introduction to the network is difficult according to this method in which two systems operate in association with each other because a protocol between the SIP-ALG and the NAT comes to depend on a vendor and interworking of a plurality of vender's systems is difficult.

It is therefore a first object of the present invention to provide a SIP server and an information communication terminal which allow the interworking of an IPv4/IPv6 dual information communication terminal with each of an IPv4 information communication terminal and an IPv6 information communication terminal without using the SIP-ALG.

A second object of the present invention is to provide instant messaging and a presence service between an IPv4 information communication terminal and an IPv6 information communication terminal without using the SIP-ALG.

In order to accomplish the first object, according to the present invention, there is provided a network system including a server connected to a first terminal, which is communicable both of a command corresponding to a first communication protocol and a command corresponding to a second communication protocol, and to a second terminal communicable either one of a command corresponding to the first communication protocol and a command corresponding to the second communication protocol.

The server is comprised of a receiving unit for receiving a command transmitted from the first terminal to said second terminal, a judging unit for judging whether the received command is a command communicable with the second terminal, and a transmitting unit for transmitting, if it is judged in the judging unit that the received command is not of a protocol communicable with the second terminal, a command notifying the first terminal of the result of the judgment.

In order to accomplish the first object, according to the present invention, there is provided a terminal connected to a communication partner terminal capable of communicating either one of a command corresponding to a first communication protocol and a command corresponding to a second communication protocol via the server, the terminal comprising a transmitting unit capable of transmitting a command corresponding to the first communication protocol and a command corresponding to the second communication protocol and a receiving unit for receiving from the server, a notification indicating that the command transmitted from the transmitting unit is different from a command communicable with the communication partner terminal.

In order to accomplish the second object, according to the present invention, there is provided a session control system comprising a control unit for performing a process of establishing a session between information communication terminals connected to an IP network, a receiving unit for receiving from a first information communication terminal, a session control request packet to a second information communication terminal, and a transmitting unit for transmitting, if the IP protocol version of the session control request packet is different from an IP protocol version usable by the second information communication terminal, a packet obtained by converting an IP header of the session control request packet to the IP protocol usable by the second' information communication terminal; an information communication terminal communicable with another information communication terminal to be a communication partner using a first communication protocol via an IP network, the information communication terminal comprising a receiving unit for receiving a session establishment request transmitted from the information communication terminal to be the communication partner and a transmitting unit for transmitting, if the session requested to establish depends on a communication protocol other than the first communication protocol, a notification indicating that the session should be established with the first communication protocol to the partner information communication terminal; and a network system including the session control system and the information communication terminals.

### BRIEF DESCRIPTION OF THE DRAWINGS

FIG. 1 shows an example of a network structure which implements a communication method according to the present invention.
FIG. 2 shows an example of a network structure which implements the communication method according to the present invention.
FIG. 3 shows an example of a procedure which implements the communication method according to the present invention.
FIG. 4 shows an example of a procedure which implements the communication method according to the present invention.
FIG. 5 shows an example of a procedure which implements the communication method according to the present invention.
FIG. 6 shows an example of a procedure which implements the communication method according to the present invention.
FIG. 7 shows an example of a procedure which implements the communication method according to the present invention.
FIG. 8 shows an example of a procedure which implements the communication methodaccording to the present invention.
FIG. 9 shows an example of a network structure which implements the communication method according to the present invention.
FIG. 10 shows an example of a procedure which implements the communication method according to the present invention.
FIG. 11 shows an example of a network structure which implements the communication method according to the present invention.
FIG. 12 shows an example of a network structure which implements the communication method according to the present invention.
FIG. 13 shows an example of a procedure which implements the communication method according to the present invention.
FIG. 14 shows an example of a procedure which implements the communication method according to the present invention.
FIG. 15 shows an example of a procedure which implements the communication method according to the present invention.
FIG. 16 shows an example of a procedure which implements the communication method according to the present invention.
FIG. 17 shows an example of a procedure which implements the communication method according to the present invention.
FIG. 18 shows an example of a procedure which implements the communication method according to the present invention.
FIG. 19 shows an example of a procedure which implements the communication method according to the present invention.
FIG. 20 shows an example of a procedure which implements the communication method according to the present invention.
FIGS. 21A-21D each shows a SIP packet format for implementing the communication method according to the present invention.
FIG. 22 shows a SIP packet format (RFC3261) for implement a SIP communication method.
FIG. 23 shows a SIP packet format (SDP:RFC2327) for implement the SIP communication method.
FIG. 24 shows an example of a structure of a SIP Proxy server for implementing the communication method according to the present invention.
FIG. 25 shows an example of a structure of the SIP Proxy processing unit of the SIP Proxy server for implementing the communication method according to the present invention.
FIG. 26 shows an example of a structure of an information communication terminal for implementing the communication method according to the present invention.
FIG. 27 shows an example of a structure of a SIP protocol processing unit of the information communication terminal for implementing the communication method according to the present invention.

### DETAILED DESCRIPTION OF THE PREFERRED EMBODIMENTS

### [Embodiment 1]

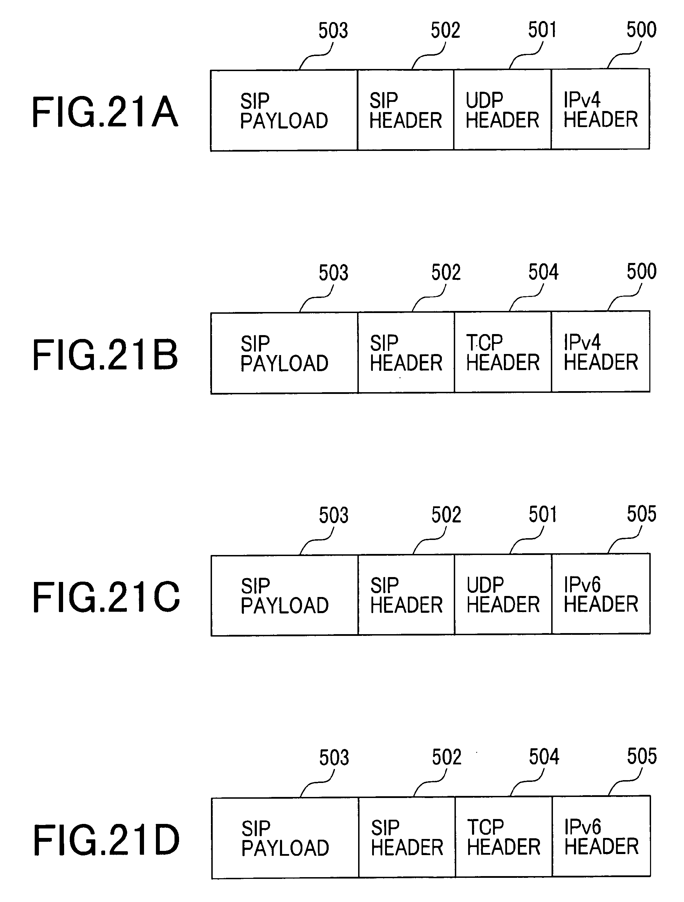

FIGS. 21A-21B showpacket formats of a SIP packet used for communication according to the present invention. The SIP packet is composed of a SIP payload portion 503, a SIP header portion 502 , a layer 4 header (an UDP header 501 or a TCP header 504), and an IP header (an IPv4 header 500 or an IPv6 header 505).

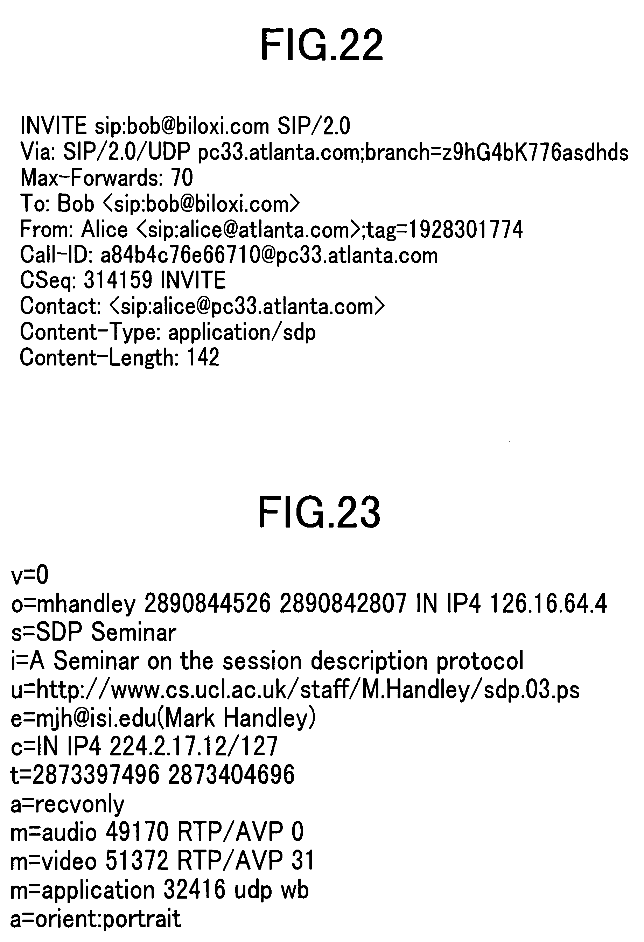

FIG. 22 shows an example of the SIP header portion 502 of the SIP packet used in the present invention.

FIG. 23 shows an example of the payload portion 503 of the SIP packet used in the present invention. A negotiation on communication abilities such as a support service and a support protocol between two terminals is performed by using the payload portion. In the present payload, the IPv4 is designated by a "c" header as a communication protocol. If the communication abilities of the two terminals are different, e.g., whether or not another procedure should be selected is judged from this field.

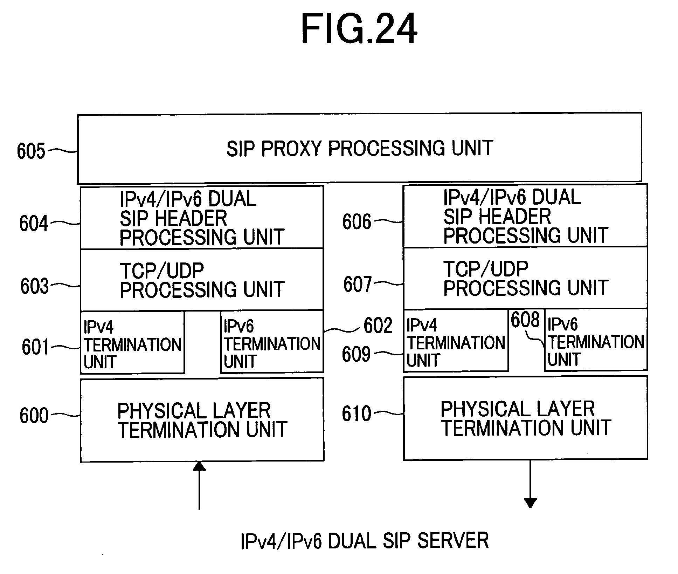

FIG. 24 is a structural view of an IPv4/IPv6 dual SIP server 1 according to the present invention.

A physical layer termination 600 terminates the physical layer, e.g., the Ethernet (Registered Trademark) or the like, of an arrived SIP packet. The termination used herein indicates the processing of the protocol of a layer and the passing of the payload over to a process in a higher layer. It is also judged whether a packet included therein is an IPv4 packet or an IPv6 packet and the packet is selectively sent to an IPv4 termination unit 601 or to an IPv6 termination unit 602.

The IPv4 termination unit 601 and the IPv6 termination unit 602 terminate an IP layer. A TCP/UDP processing unit 603 terminates the TCP or UDP. A SIP header processing unit 604 performs a header check according to the SIP protocol and the like and sends the packet to a SIP Proxy processing unit 605. The header check used here indicates the process of checking whether the contents of a SIP header is matched or not.

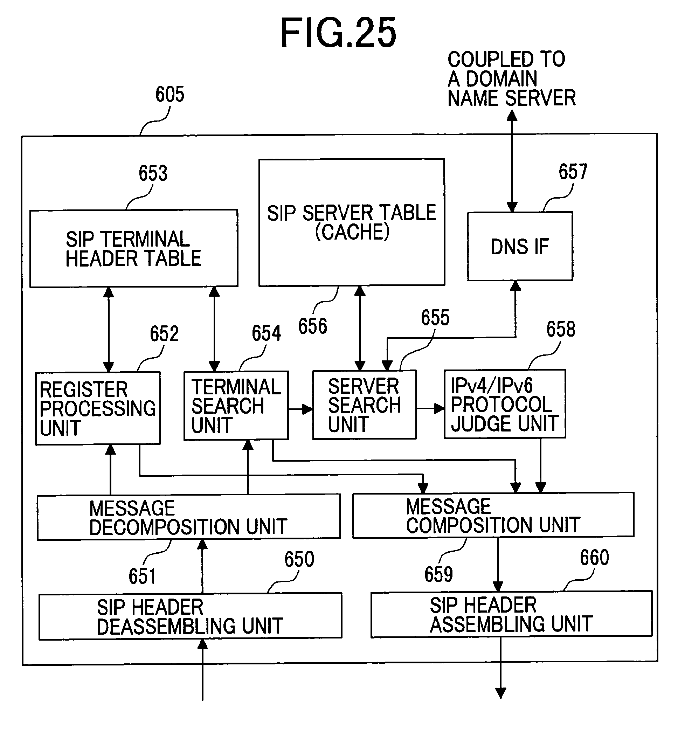

The SIP Proxy processing unit 605 performs the acceptance of a registration and a forwarding process for each of SIP packets, the detailed operation of which will be given with reference to FIG. 25. The forwarding process used herein indicates theprocess of determining, from the contents of the header, a path to which the packet is sent next and transfers the packet without passing it over to a process in a higher layer. The registration means to receive a register message transmitted from a terminal and to perform registration of the terminal by a SIP server. A SIP packet, the transfer destination of which has been determined, is assembled into a SIP packet by a SIP header processing unit 606 and sent out to the network through a TCP/UDP processing unit 607, an IPv4 termination 609 or an IPv6 termination 608, and a physical layer termination 610.

FIG. 25 is a detailed structural view of the SIP Proxy processing unit 605 of the IPv4/IPv6 dual SIP server 1 according to the present invention.

A SIP header deassembling unit 650 deassembles the SIP header of an arrived SIP packet. A message decomposition unit 651 determines the type of a message and, if it is a register message, sends the packet to a register processing unit 652. A packet to be relayed such as Invite or Bye packet is distributed to a terminal search unit 654. The register message used herein is a message for a user to make a registration to a SIP server.

On arrival of a packet for a register procedure, the register processing unit 652 judges whether the registration can be accepted or not and, if it is acceptable, performs the registration of a terminal to a SIP terminal header table. The terminal search unit 654 checks whether an objective terminal having the destination address has performed registration to the SIP server. If the objective terminal has performed registration, it is registered in a SIP terminal header table 653. In this case, the SIP packet is sent together with the table search result to a message composition unit 659. If the objective terminal has not been registered, a server search unit 655 searches a SIP server table 656 first for a SIP server in which the objective terminal has been registered. If the objective SIP server has been registered in the SIP server table 656, the SIP packet is sent together with the table search result to the message composition unit 659. If the objective SIP server has not been registered, an inquiry is made to a DNS server via a DNS interface (DNS IF) 657.

Next, a v4/v6 protocol judge unit 658 examines the protocol of the objective SIP server. There are three types of processing methods used here. (1) By comparing the respective IP versions of the arrived SIP packet and a SIP packet to be sent out, it is decided, if they are different, to send back an instruction to change the communication protocol to a transmitter terminal of the arrived SIP packet. (2) By comparing the IP version of the SIP packet to be sent out and an IP version obtained from the result of analyzing the communication ability portion of the PDU in the arrived SIP packet, it is decided, if they are different, to send back an instruction to change the communication protocol to the transmitter terminal of the arrived SIP packet. (3) An IP version for use in carrying the SIP packet to be sent is checked. Specifically, the respective IP versions of the received SIP packet and the SIP packet to be sent are checked.

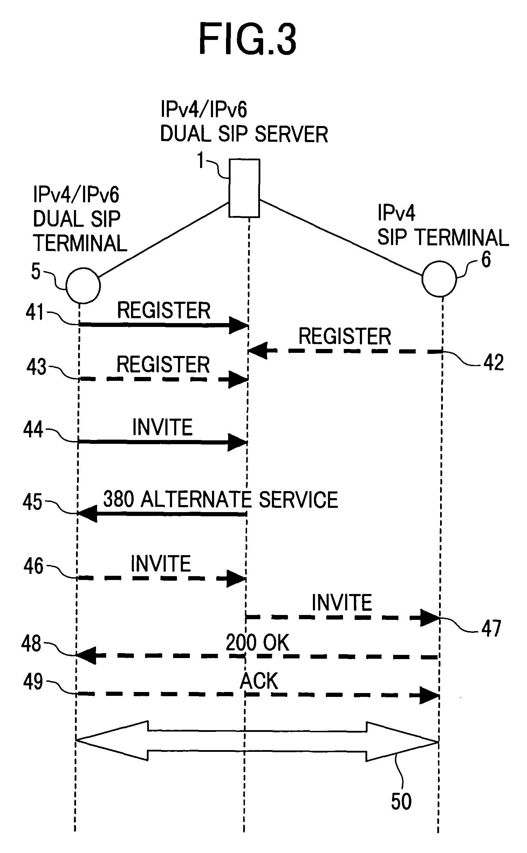

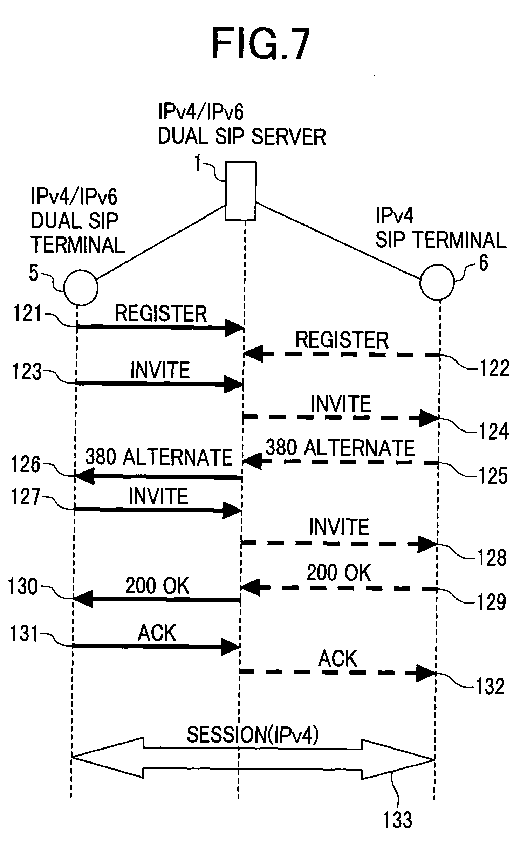

If the SIP server is equipped with one of the judging methods (1) and (2), the respective procedures shown in FIGS. 3 and 4, FIGS. 5 and 6, FIGS. 13 and 14, and FIGS. 17 and 18 can be realized as will be describe hereinafter. If the SIP server is equipped with the judging method (3), the respective procedures shown in FIGS. 7 and 8, FIG. 10, FIGS. 15 and 16, and FIGS. 19 and 20 can be realized.

When the judgment is terminated, the packet and the result of the processing are sent to the message composition unit 659 and, when the contents of a message is determined in the message composition unit 659, a SIP header assembling unit 660 assembles a SIP packet and sends out the packet to the IPv4/IPv6 dual SIP header processing unit 606.

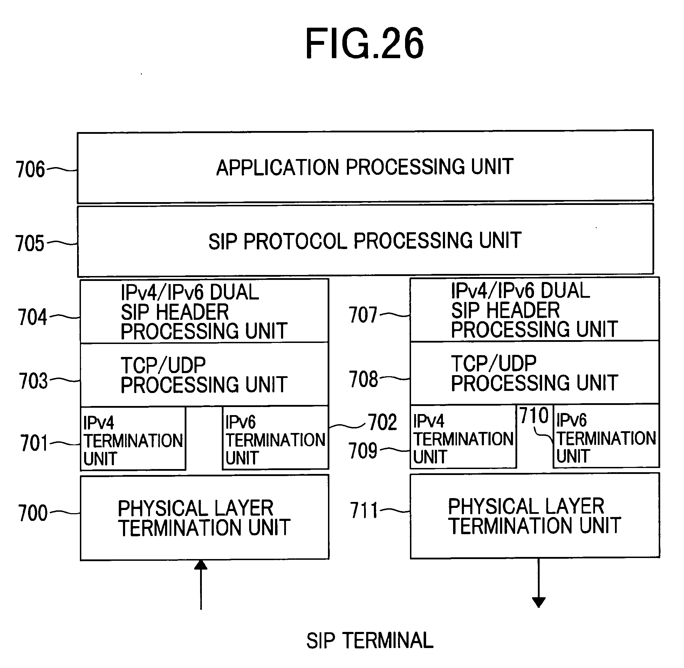

FIG. 26 is a structural view of the IPv4/IPv6 dual information communication terminal (IPv4/IPv6 dual SIP terminal) according to the present invention. A description will be given first to the case of a SIP packet transmission.

Upon receiving a session establishment request from an application processing unit 706, a SIP protocol processing unit 705 collects information for a SIP message. Then, the SIP packet having been determined its transfer destination is assembled into a SIP packet in a IPv4/IPv6 dual SIP header processing unit 707 and sent out to a network through a TCP/UDP processing unit 708, an IPv4 termination unit 709 or an IPv6 termination unit 710, and a physical layer termination unit 711.

A description will be given to the operation in the case of a SIP packet reception. A physical layer termination unit 700 terminates the physical layer, e.g., the Ethernet (Registered Trademark) or the like of an arrived SIP packet. The physical layer termination unit 700 also judges whether the packet contained in the arrived SIP packet is an IPv4 packet or an IPv6 packet and selectively sends the packet to an IPv4 termination unit 701 or to an IPv6 termination unit 702 in accordance with the protocol version. The IPv4 termination unit 701 and the IPv6 termination unit 702 terminate the IP layer. A TCP/UDP processing unit 703 terminates the TCP or UDP layer of the received packet. The IPv4/IPv6 dual SIP header processing unit 704 performs a header check of the SIP protocol and the like and sends the packet to the SIP protocol processing unit 705.

The SIP protocol processing unit 705 performs a header analyzing process and a session control procedure on the received message. When the session control procedure is completed and if an application should to be activated, the SIP protocol processing unit 705 notifies it to the application processing unit 706. If a reply is necessary in accordance with the session control procedure, the SIP protocol processing unit 705 performs a replying process.

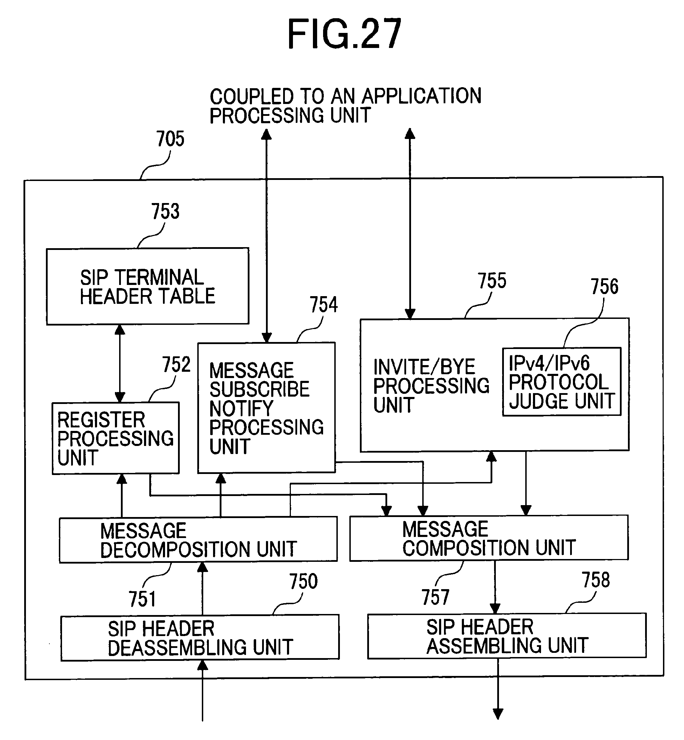

FIG. 27 is a detailed structural view of the SIP protocol processing unit 705 of the IPv4/IPv6 dual SIP terminal 1 according to the present invention.

If the terminal is turned ON, a register processing unit 752 initiates the procedure of transmitting a register message and notifies a message composition unit 757 of the transmission of the register procedure to a belonging SIP proxy defined in a SIP terminal header table 753 so that a SIP packet is transmitted to the IPv4/IPv6 dual SIP header processing unit 707 via a SIP header assembling unit 758.

If the application processing unit 706 requests a message subscribe notify processing unit 754 of a Message procedure, a Subscribe procedure or a Notify procedure, the message subscribe notify processing unit 754 performs the process of transmitting a SIP packet to each terminal via the belonging SIP Proxy defined in the SIP terminal header table 753 and the SIP packet is transmitted to the IPv4/IPv6 dual SIP header processing unit 707 via the SIP header assembling unit 758. As for the message procedure, the subscribe procedure and the notify procedure, there are description in the RFC3265.

A description will be given next to the processing performed at the receiving side. A SIP header deassembling unit 750 deassembles the SIP header of an arrived SIP packet. A message decomposition unit 751 judges the type of a message in the SIP packet and distributes the message to one of the processing units. If the message is a register message, it is sent to the register processing unit 752. A packet which needs to be relayed such as Invite or Bye is distributed to the Invite/BYE processing unit 755.

The register processing unit 752 performs, when a reply is made to a packet for a register procedure, the process of timer setting for performing a time-out process for the registration and the like and registers the status in the SIP terminal header table 653. If the message is a Message Subscribe Notify message, the message decomposition unit 751 sends it to the message subscribe notify processing unit 754 which performs a predetermined process and notifies the application processing unit 706. If the message relates to the establishment or disconnection of a session such as Invite/ACK/BYE/CANCEL messages, the message decomposition unit 751 notifies it to an Invite/BYE processing unit 755.

If session control is to be terminated, the Invite/BYE processing unit 755 terminates the session control and notifies it to the application processing unit 706. If a reply is to be made to a session control request, the Invite/BYE processing unit 755 notifies it to a IPv4/IPv6 protocol judge unit 756. The IPv4/IPv6 protocol judge unit 756 instructs the Invite/BYE processing unit 755 to perform a normal replying process if the protocols match between the two terminals or instructs to generate a packet for notifying that the protocol is not communicable with the destination terminal (e.g., the sequence 125 of FIG. 7) if the protocols do not match with each other. When the judgment is completed, the packet and the processing result are sent to the message composition unit 757. When the contents of the message is determined in the message composition unit 757, the SIP header assembling unit 758 assembles a SIP packet and sends out the SIP packet to the IPv4/IPv6 dual SIP header processing unit 707.

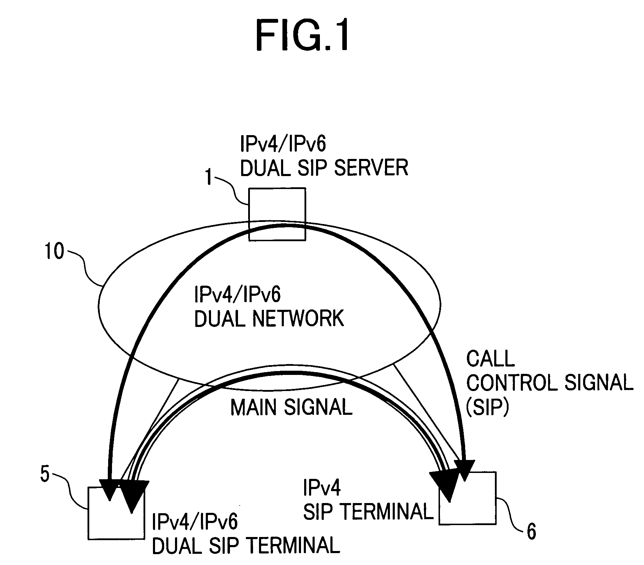

FIG. 1 shows an embodiment in the case where an IPv4/IPv6 dual SIP terminal 5 according to the present invention and an IPv4 SIP terminal 6 perform communication therebetween.

In the present embodiment, the IPv4/IPv6 dual SIP terminal 5, the IPv4 SIP terminal 6, and the IPv4/IPv6 dual SIP server 1 are connected to an IPv4/IPv6 dual network 10. SIP packets for effecting call control are transmitted via the IPv4/IPv6 dual SIP server 1 and main signals including voice signals and streaming data are transmitted directly via the IPv4/IPv6 dual network 10 without intervention of the IPv4/IPv6 dual SIP server 1.

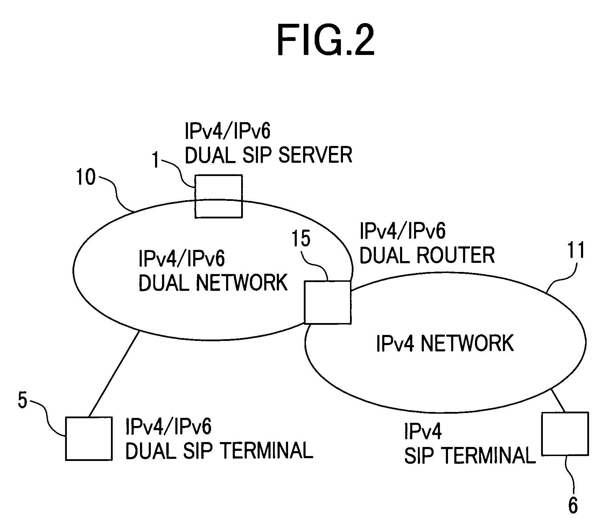

FIG. 2 shows an embodiment in the case where the IPv4/IPv6 dual SIP terminal 5 according to the present invention and the IPv4 SIP terminal 6 perform communication therebetween. In the present embodiment, the IPv4/IPv6 dual SIP terminal 5 and the IPv4/IPv6 dual SIP server 1 are connected to the IPv4/IPv6 dual network 10, while the IPv4 SIP terminal 6 is connected to an IPv4 network 11. The IPv4/IPv6 dual network 10 and the IPv4 network 11 are connected to each other via an IPv4/IPv6 dual router 15. The SIP packets for effecting call control are transmitted via the IPv4/IPv6 dual SIP server 1, while the main signals including voice signals and streaming data are transmitted via the IPv4/IPv6 dual network 10 and the IPv4 network 11 without intervention of the IPv4/IPv6 dual SIP server 1.

### (Embodiment 1-1)

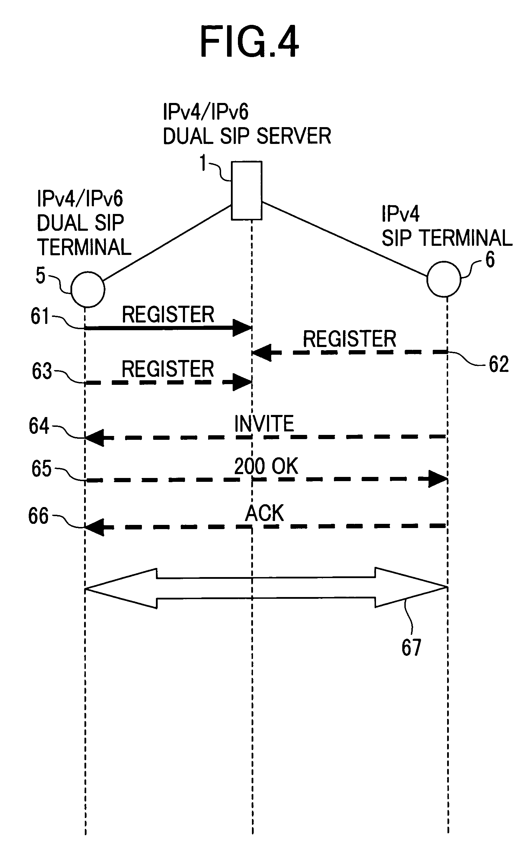

FIGS. 3 and 4 show an embodiment of a communication procedure in the case where the IPv4/IPv6 dual SIP terminal 5 according to the present invention and the IPv4 SIP terminal 6 perform communication therebetween. FIG. 3 shows the sequence of a call from the IPv4/IPv6 dual SIP terminal 5 and FIG. 4 shows the sequence of a call from the IPv4 terminal. In the drawings, the sequence indicated by the solid lines shows a communication procedure using IPv6 packets and the sequence indicated by the broken lines shows a communication procedure using IPv4 packets.

In the present embodiment, each of the IPv4/IPv6. dual SIP terminal 5 and the IPv4 SIP terminal 6 performs a registration to the same IPv4/IPv6 dual SIP server 1.

The IPv4/IPv6 dual SIP terminal 5 performs a registration to the IPv4/IPv6 dual SIP server 1 in accordance with an IPv6 register procedure (REGISTER) (41) and an IPv4 register procedure (43) based on each of the IPV4 and IPV6 protocols. This allows the IPv4/IPv6 dual SIP terminal 5 to be ready for SIP communication using each of the IPv4 and IPv6 protocols. This also allows the IPv4/IPv6 dual SIP server 1 to be ready for establishing a session using each of the IPv4 and IPv6 protocols for the IPv4/IPv6 dual SIP terminal 5.

When an Invite procedure (44) is performed from the IPv4/IPv6 dual SIP terminal 5, if the IP protocol of the Invite procedure (44) and the IP protocol usable by the destination terminal 6 are judged to be different, the IPv4/IPv6 dual SIP server 1 according to the present invention notifies (45) the SIP terminal 5 that the current IP protocol is different from the IP protocol communicable with the IPv4 SIP terminal 6.

Although the present embodiment shows an example in which notification is performed by using the 380 Alternate Service procedure of the SIP protocol, the 380 Alternate Service procedure need not be used if the objects of the present invention can be accomplished. Upon receiving the notification, the IPv4/IPv6 dual SIP terminal 5 performs the Invite procedure 46 again by using the IP protocol, which is the IPv4 in the present embodiment, communicable with the terminal 6 and the Invite (47) is transferred to the terminal 6 via the SIP server 1 to allow session establishment (48-50).

FIG. 4 shows the sequence of a call from the IPv4 terminal 6 to the IPv4/IPv6 dual SIP terminal 5. In the case of a call from the IPv4 terminal 6, the IPv4/IPv6 dual SIP terminal 5 can receive the call by using either of the IPv6 and IPv4 since the registrations have been performed (61, 63) with both of the two protocols. Therefore, when the IPv4 SIP terminal 6 requests (64) a session using the IPv4, the session can be established (65-67).

According to the method, it is unnecessary to equip the IPv4 SIP terminal 6 with a function related to protocol selection. Likewise, it is also unnecessary to provide the function of protocol selection in the case of accommodating IPv6 information terminals. Therefore, the method is particularly effective in the case of providing a service to SIP terminals including a terminal to which an existing service is offered by using a single protocol. In addition, the IPv4/IPv6 dual SIP terminal 5 and the IPv4/IPv6 dual SIP server can perform a registration according to each of the IPv4 and IPv6 by performing both of the registration processes of the two protocols. This offers the advantage that execution of a mixed-protocol registration process involving the IPv4 and IPv6 is not necessary.

### (Embodiment 1-2)

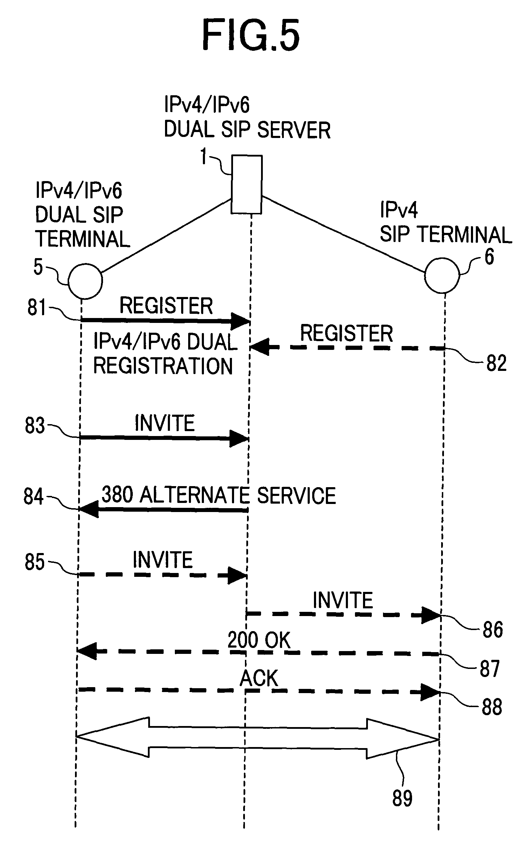

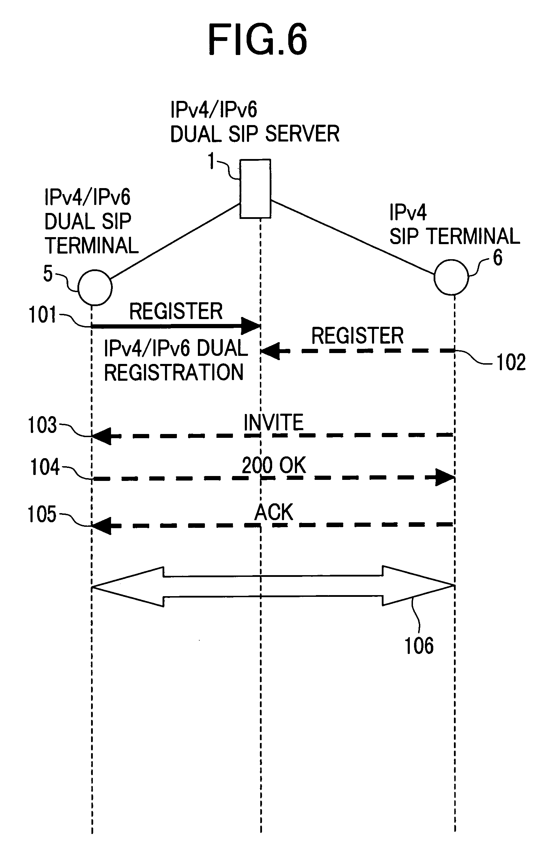

FIGS. 5 and 6 show an embodiment of a communication procedure in the case where the IPv4/IPv6 dual SIP terminal 5 according to the present invention and the IPv4 SIP terminal 6 perform communication therebetween. FIG. 5 shows the sequence of a call from the IPv4/IPv6 dual SIP terminal 5 and FIG. 6 shows the sequence of a call from the IPv4 terminal. In the drawings, the sequence indicated by the solid lines shows a communication procedure using IPv6 packets and the sequence indicated by the broken lines shows a communication procedure using IPv4 packets.

The present embodiment shows the case where each of the IPv4/IPv6 dual SIP terminal 5 and the IPv4 SIP terminal 6 performs a registration (81,82) to the same IPv4/IPv6 dual SIP server 1. According to the present embodiment, as shown in FIG. 5, the IPv4/IPv6 dual SIP terminal 5 registers an IPv4 address and an IPv6 address simultaneously in accordance with an IPv4/IPv6 dual register procedure (81). Consequently, a packet for the Register procedure (81) is transmitted with each of the IPV4 address and the IPv6 address described in the PDU thereof. This allows the IPv4/IPv6 dual SIP terminal 5 to be ready for establishing a session using each of the IPv4 and the IPv6 protocols. This also allows the IPv4/IPv6 dual SIP server 1 to be ready for establishing a session using each of the IPv4 and IPv6 protocols for the IPv4/IPv6 dual SIP terminal 5.

Although the register procedure (81) has used the IPv6 protocol in the present embodiment, it is also possible to send a register procedure by using the IPv4 protocol if both the IPv4 address and the IPv6 address are described in the PDU. When the Invite procedure (83) is performed from the IPv4 SIP terminal 5, if the IP protocol of this Invite procedure is judged to be different from the IP protocol usable by the destination terminal 6, the IPv4/IPv6 dual SIP server 1 notifies (84) the terminal 5 that the current IP protocol is different from the IP protocol usable by the terminal 6.

By way of example, the present embodiment shows the case where notification is performed by using the 380 Alternate Service procedure of the SIP protocol. However, the 380 Alternate Service procedure need not be used if the objects of the present invention can be accomplished. The IPv4/IPv6 dual SIP terminal 5 that has received the notification performs the Invite procedure (85) again by using the IP protocol, which is the IPv4 in the present embodiment, communicable with the IPv4 SIP terminal 6, the Invite (86) is transferred to the terminal 6 via the IPv4/IPv6 dual SIP server 1 to allow session establishment (87-89).

FIG. 6 shows an embodiment of a communication procedure in the case of a call from the IPv4 SIP terminal 6 to the IPv4/IPv6 dual SIP terminal 5. In the case of a call from the IPv4 terminal 6, the IPv4/IPv6 dual SIP terminal 5 can receive the call by using either of the IPv6 and IPv4 protocols since each of the IPv6 address and the IPv4 address has been registered (101). Accordingly, if the IPv4 SIP terminal 6 requests (103) a session using the IPv4, the session can be established (103).

According to the method, it is unnecessary to equip the IPv4 SIP terminal 6 with a function of protocol selection. Therefore, the method is particularly effective in the case of providing a service to SIP terminals including a terminal to which an existing service is offered by using a single protocol. Although it is necessary to perform the registration from the IPv4/IPv6 dual SIP terminal 5 twice in Embodiment 1-1, Embodiment 1-2 can complete the IPv4/IPv6 dual registrations by performing the registration only once.

### (Embodiment 1-3)

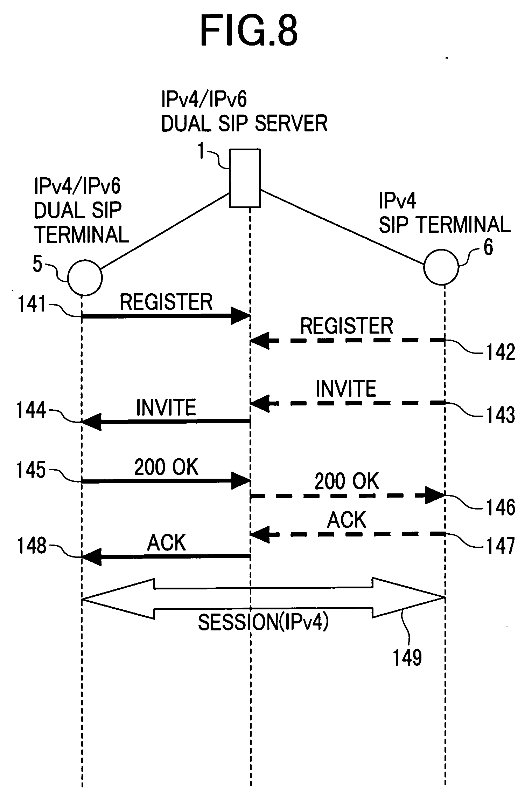

FIGS. 7 and 8 show an embodiment of a communication procedure in the case where the IPv4/IPv6 dual SIP terminal 5 according to the present invention and the IPv4 SIP terminal 6 perform communication therebetween. FIG. 7 shows the sequence of a call from the IPv4/IPv6 dual SIP terminal 5 and FIG. 8 shows the sequence of a call from the IPv4 terminal.

In the present embodiment, the IPv4/IPv6 dual SIP terminal 5 performs an IPv4-based register procedure (121) to the SIP server 1, while the IPv4 SIP terminal 6 performs an IPv4-based register procedure (122) to the SIP server 1. When the Invite procedure is sent (123) from the IPv4/IPv6 dual SIP terminal 5 to the SIP server 1, the SIP server 1 replaces the IPv6 header 4 with the IPv4 header and performs the Invite procedure (124) to the IPv4 SIP terminal 6. At this time, the SIP server 1 does not perform the IPv4/IPv6 translation of the SIP payload portion.

As a result, the IPv4 SIP terminal 6 receives a packet for the Invite procedure in which IPv4/IPv6 protocols coexist in the SIP payload portion (124). However, the IPv4 SIP terminal 6 interprets the SIP payload in which the IPv6 and IPv4 address formats coexist and notifies the IPv4/IPv6 dual SIP terminal 5 that the IPv4 SIP terminal 6 performs communication using the IPv4. At this time, e.g., the 380 Alternate Service is returned for the notification (125). However, the 380 Alternate Service need not be used if the objects of the present invention can be accomplished.

The SIP server 1 replaces the IPv4 header of the received 380 Alternate Service with the IPv6 header and transfers the 380 Alternate Service (126) to the IPv4/IPv6 dual SIP terminal 5. The IPv4/IPv6 dual SIP terminal 5 sends the Invite procedure again (127) , the contents of which indicates that the IPv4 is used for the communication protocol of the main signals. When the Invite procedure (127) is sent from the IPv4/IPv6 dual SIP terminal 5 to the IPv4/IPv6 dual SIP server 1, the SIP server 1 replaces the IPv6 header with the IPv4 header and performs the Invite procedure (128) to the IPv4 SIP terminal 6. This time, since the communication protocol for the main signals is the IPv4, the IPv4 SIP terminal 6 returns the 200 OK (129).

The IPv4/IPv6 dual SIP server 1 replaces the IPv4 header with the IPv6 header and transfers the 200 OK to the IPv4/IPv6 dual SIP terminal 5 and the ACK is returned (131, 132)) by the SIP terminal 5, whereby the session is established according to the IPv4 (133).

FIG. 8 shows an embodiment of a communication procedure in the case of a call from the IPv4 SIP terminal 6 to the IPv4/IPv6 dual SIP terminal 5.

In the present embodiment, the IPv4/IPv6 dual SIP terminal 5 performs an IPv6-based register procedure (141) to the same IPv4/IPv6 dual SIP server 1 and the IPv4 SIP terminal 6 performs an IPv4-based register procedure (142) to the IPv4/IPv6 dual SIP server 1. When an Invite procedure is sent (143) from the IPv4 SIP terminal 6 to the IPv4/IPv6 dual SIP server 1, the SIP server 1 replaces the IPv4 header with the IPv6 header and performs the Invite procedure (144) to the IPv4/IPv6 dual SIP terminal 5. At this time, the SIP server 1 does not perform the IPv4/IPv6 translation of the SIP payload portion.

As a result, the IPv4/IPv6 dual SIP terminal 5 receives a packet for the Invite procedure in which IPv4/IPv6 protocols coexist in the SIP payload portion (144). However, the IPv4/IPv6 dual SIP terminal 5 interprets the SIP payload in which the IPv6 and IPv4 address formats coexist. This time, since the communication protocol for the main signals is the IPv4, the IPv4/IPv6 dual SIP terminal 5 returns the 200 OK (145). The SIP server 1 replaces the IPv6 header with the IPv4 header and transfers (146) the 200 OK to the IPv4/IPv6 dual SIP terminal 5 and the SIP terminal 5 returns the ACK (147,148), whereby the session is established with the IPv4 (149).

According to the method, it is unnecessary to equip the IPv4 SIP terminal 6 with a function of protocol selection. Although it becomes necessary for the IPv4/IPv6 dual SIP terminal 5 to perform the function of communicating the main signals with each of the IPv4/IPv6 protocols, the function of communicating control signals according to the SIP can be realized by supporting only one of the protocols.

### [Embodiment 2]

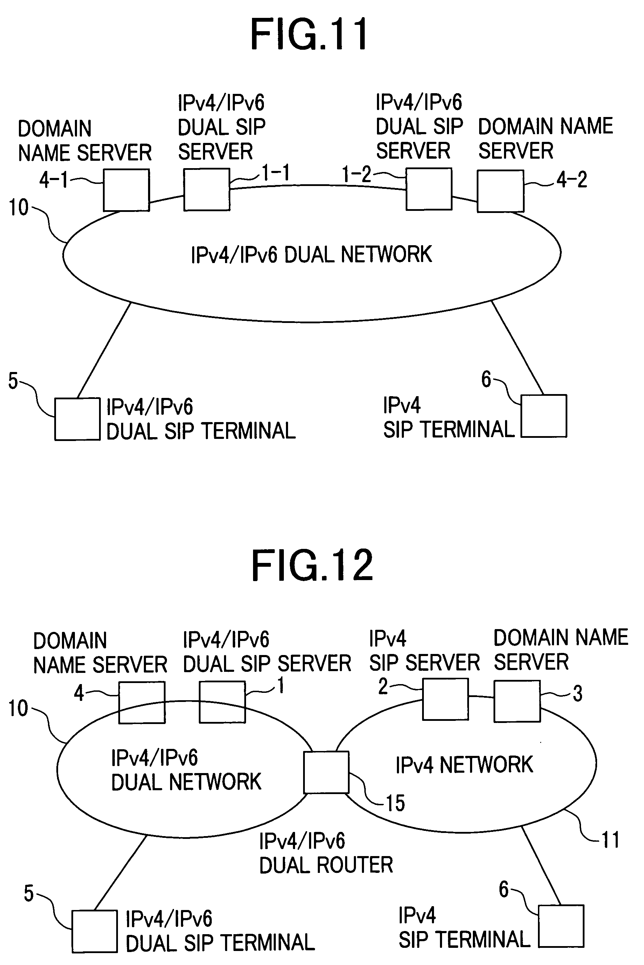

FIG. 11 shows an embodiment in the case where the IPv4/IPv6 dual SIP terminal 5 according to the present invention and the IPv4 SIP terminal 6 perform communication therebetween. In the present embodiment, the IPv4/IPv6 dual SIP terminal 5, the IPv4 SIP terminal 6, an IPv4/IPv6 dual SIP server 1-1 and an IPv4/IPv6 dual SIP server 1-2 are connected to the IPv4/IPv6 dual network 10.
A SIP server to which the IPv4/IPv6 dual SIP terminal 5 belongs, i.e., in which it is registered is the IPv4/IPv6 dual SIP server 1-1 and a SIP server to which the IPv4 SIP terminal 6 belongs is the IPv4 SIP server 1-2. This configuration means that the two terminals are accommodated, i.e., registered in the different SIP servers. A DNS server 4-1 and a DNS server 4-2 are used for the two SIP servers to resolvetheirpartner'saddressesrespectively. In the present embodiment, the SIP server 1-1 uses the DNS server 4-1, while the SIP server 1-2 uses the DNS server 4-2.

Although only two SIP servers 1-1 and 1-2 are described in the present embodiment, three or more SIP servers may exist on a network. Although the individual SIP servers resolve the addresses by using the different DNS servers in the present embodiment, they may use the same DNS server.

### (Embodiment 2-1)

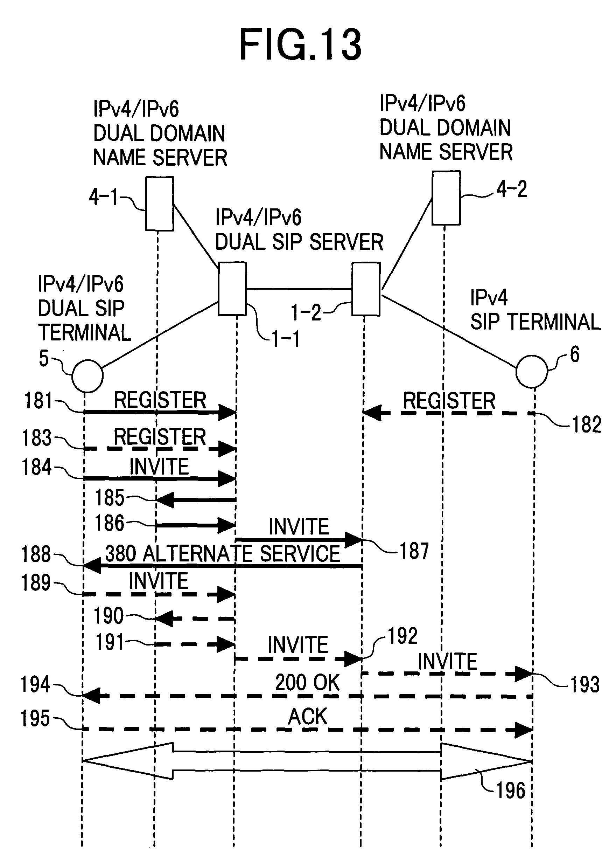

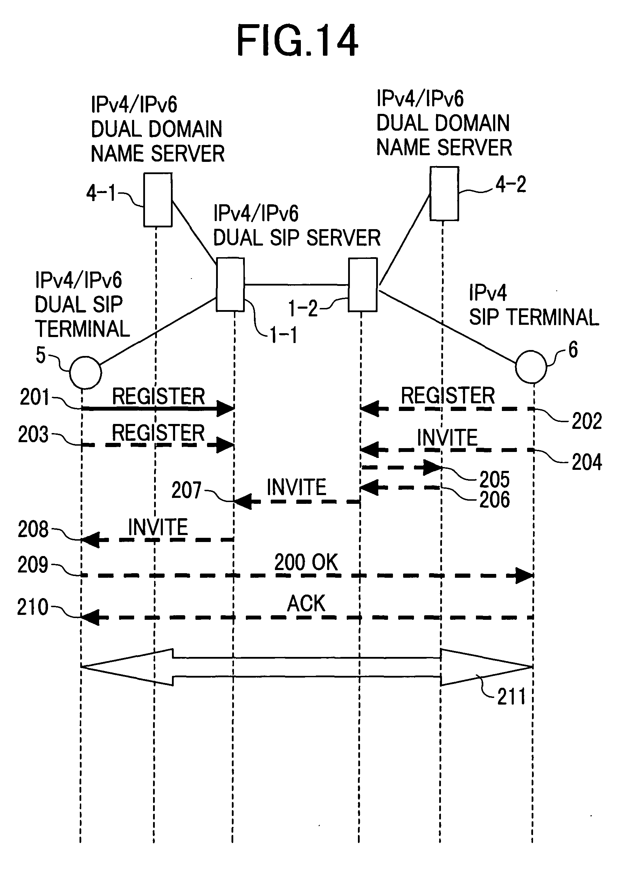

FIGS. 13 and 14 show an embodiment of a communication procedure in the case where the IPv4/IPv6 dual SIP terminal 5 according to the present invention and the IPv4 SIP terminal 6 perform communication therebetween. FIG. 13 shows the sequence of a call from the IPv4/IPv6 dual SIP terminal 5 and FIG. 14 shows the sequence of a call from the IPv4 SIP terminal 6. In the drawings, the sequence indicated by the solid lines shows a communication procedure using IPv6 packets and the sequence indicated by the broken lines shows a communication procedure using IPv4 packets.

The present embodiment shows the case where the IPv4/IPv6 dual SIP terminal 5 and the IPv4 SIP terminal 6 perform a registration to the different IPv4/IPv6 dual SIP servers 1-1 and 1-2, respectively. The IPv4/IPv6 dual SIP terminal 5 according to the present embodiment performs a registration to the IPv4/IPv6 dual SIP server 1 in accordance with each of the IPv6 register procedure (181) and the IPv4 register procedure (183) with each of the IPv4 and IPv6 protocols. This allows the IPv4/IPv6 dual SIP terminal 5 to be ready for establishing a session using each of the IPv4 and IPv6 protocols. This also allows the IPv4/IPv6 dual SIP server 1 to be ready for establishing a session using each of the IPv4 and IPv6 protocols for the IPv4/IPv6 dual SIP terminal 5.

When an Invite procedure (184) is performed from the terminal 5, if the IPv4/IPv6 dual SIP server 1-1 according to the present invention recognizes that the destination SIP terminal 6 is a terminal belonging to another domain and not registered in the SIP server 1-1, the IPv4/IPv6 dual SIP server 1-1 inquires (185) the DNS server 4-1 of the IP address of a SIP server in the domain to which the destination SIP terminal 6 belongs. The DNS server 4-1 returns (186) the IP address of the SIP server 1-2 to the SIP server 1-1. Since the IP address of the SIP server 1-2 has been resolved, the IPv4/IPv6 dual SIP server 1-1 transfers (187) the Invite procedure to the SIP server 1-2. The IPv4/IPv6 dual SIP server 1-2 then judges that the current communication protocol is different from that protocol usable by the destination SIP terminal 6 and notifies (188) the IPv4/IPv6 dual SIP server 1-1 that the SIP terminal 6 cannot use the IPv6.

The present embodiment shows an example in which notification (188) is performed by using the 380 Alternate Service procedure of the SIP protocol. However, the 380 Alternate Service procedure need not be used if the objects of the present invention can be accomplished.

The SIP server 1-1 transfers the notification packet to the terminal 5. Upon receiving the notification, the terminal 5 performs the Invite procedure again (189) by using the protocol, which is the IPv4 in the present embodiment, usable by the terminal 6. Subsequently, the Invite (189) is transferred (192, 193) to the terminal 6 via the IPv4/IPv6 SIP server 1-1 and the session can be established (194-196) according to the IPv4 protocol.

FIG. 14 shows an embodiment of a communication procedure in the case of a call from the IPv4 SIP terminal 6 to the IPv4/IPv6 dual SIP terminal 5.

In the case of a call from the IPv4 terminal 6, the IPv4/IPv6 dual SIP terminal 5 can receive the call by using either of the IPv6 and IPv4 since the registration (201, 203) has been performed with each of the two protocols and a session can be established (204-211) with the IPv4 protocol (211).

According to the method, it is unnecessary for the IPv4 SIP terminal 6 to equip a function of protocol selection. Likewise, it is also unnecessary to equip IPv6 SIP terminals with the function related to protocol selection. Therefore, the method is particularly effective in the case of providing a service to communication terminals including a terminal to which an existing service is offered by using a single protocol. In addition, the IPv4/IPv6 dual SIP terminal 5 and the IPv4/IPv6 dual SIP server 1 can perform a registration based on each of the IPv4 and IPv6 by performing the registration process using each of the two protocols. This offers the advantage that execution of a mixed-protocol or dual-protocol registration process involving the IPv4 and IPv6 is not necessary.

### (Embodiment 2-2)

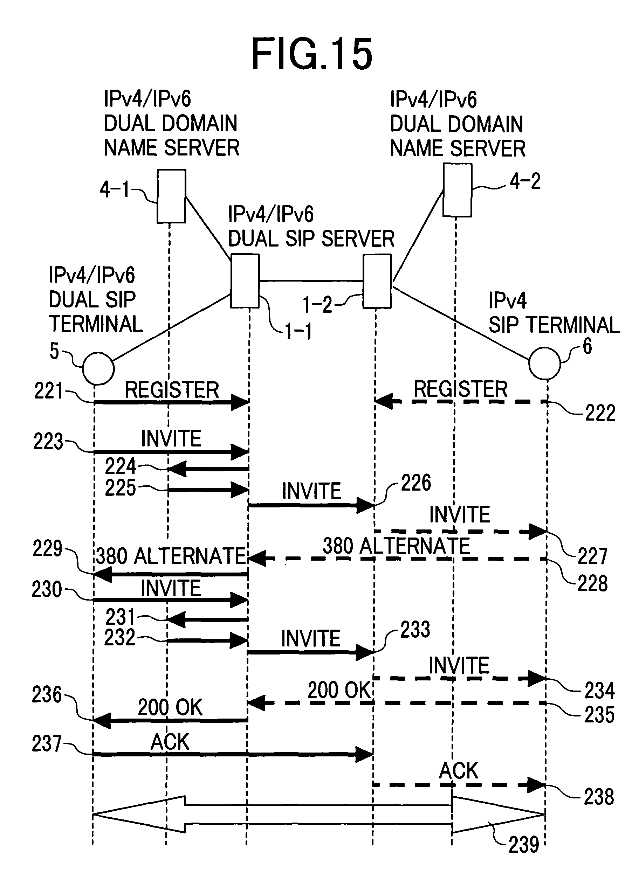

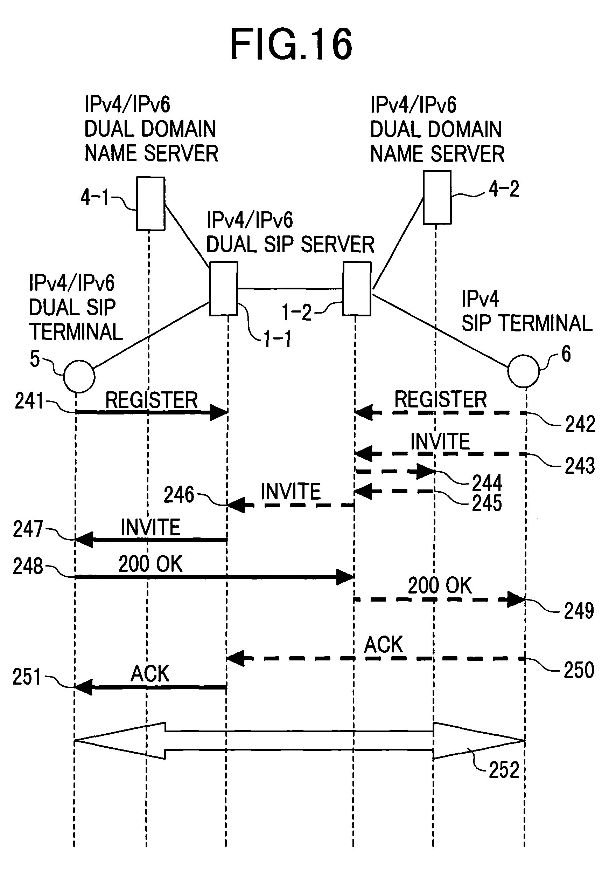

FIGS. 15 and 16 show an embodiment of a communication procedure in the case where the IPv4/IPv6 dual SIP terminal 5 according to the present invention and the IPv4 SIP terminal 6 perform communication therebetween. FIG. 15 shows the sequence of a call from the IPv4/IPv6 dual SIP terminal 5 and FIG. 16 shows the sequence of a call from the IPv4 SIP terminal 6. In the drawings, the sequence indicated by the solid lines shows a communication procedure using IPv6 packets and the sequence indicated by the broken lines shows a communication procedure using IPv4 packets.

In the present embodiment, IPv4/IPv6 dual SIP terminal 5 performs an IPv6-based registration (221) to the IPv4/IPv6 dual SIP server 1-1, while the IPv4 SIP terminal 6 performs an IPv4-based registration (222) to the IPv4/IPv6 dual SIP server 1-2. When the Invite procedure (223) is performed from the IPv4/IPv6 dual terminal 5, if it is recognized that the destination SIP terminal 6 is a terminal belonging to another domain and not registered in the IPv4/IPv6 dual SIP server 1-1 according to the present invention, the IPv4/IPv6 dual SIP server 1-1 inquires (224) the DNS server 4-1 of the IP address of a SIP server in the domain to which the destination SIP terminal 6 belongs. The DNS server 4-1 returns (225) the IP address of the IPv4/IPv6 dual SIP server 1-2 to the IPv4/IPv6 dual SIP server 1-1. Since the IP address of the IPv4/IPv6 dual SIP server 1-2 has been resolved, the SIP server 1-1 transfers the Invite (226) to the SIP server 1-2. The IPv4/IPv6 dual SIP server 1-2 replaces the IPv6 header with the IPv4 header and performs the Invite procedure (227) to the IPv4 SIP terminal 6. At this time, the IPv4/IPv6 dual SIP server 1-2 does not perform the IPv4/IPv6 translation of the SIP payload portion.

As a result, the IPv4 SIP terminal 6 receives a packet for the Invite procedure (227) in which IPv4/IPv6 protocols coexist in the SIP payload portion. The IPv4 SIP terminal 6 interprets it and returns, e.g., the 380 Alternate Service (228) to notify that the IPv4 SIP terminal 6 performs communication using the IPv4. However, the 380 Alternate Service need not be used if the objects of the present invention can be accomplished.

The IPv4/IPv6 dual-SIP server 1-1 replaces the IPv4 header with the IPv6 header and transfers (229) the 380 Alternate Service to the IPv4/IPv6 dual SIP terminal 5. The IPv4/IPv6 dual SIP terminal 5 sends the Invite procedure (230) again by using the IPv4 as the communication protocol for the main signals. When the Invite procedure (230) from the IPv4/IPv6 dual SIP terminal 5 is sent (233) to the IPv4/IPv6 dual SIP server 1-2, the SIP server 1-2 replaces the IPv6 header with the IPv4 header and performs the Invite procedure (234) to the IPv4 SIP terminal 6. This time, since the IPv4 has been specified as the communication protocol for the main signals, the IPv4 SIP terminal 6 returns (235) the 200 OK. The SIP server 1-1 replaces the IPv4 header of the returned 200 OK (235) with the IPv6 header and transfers (236) the 200 OK to the IPv4/IPv6 dual SIP terminal 5 and the SIP terminal 5 returns the ACK (237, 238) , whereby the session is established (239) according to the IPv4 protocol.

FIG. 16 shows an embodiment of a communication procedure in the case of a call from the IPv4 SIP terminal 6 to the IPv4/IPv6 dual SIP terminal 5.

In the present embodiment, IPv4/IPv6 dual SIP terminal 5 performs an IPv6-based registration (241) to the IPv4/IPv6 dual SIP server 1-1, while the IPv4 SIP terminal 6 performs an IPv4-based registration (242) to the IPv4/IPv6 dual SIP server 1-2. When the Invite procedure (243) is received from the terminal 6, if it is recognized that the destination SIP terminal 5 is a terminal belonging to another domain and not registered in the IPv4/IPv6 dual SIP server 1-2 according to the present invention, the IPv4/IPv6 dual SIP server 1-2 inquires (244) the DNS server 4-2 of the IP address of a SIP server in the domain to which the destination SIP terminal 5 belongs. The DNS server 4-2 returns (245) the IP address of the SIP server 1-1 to the IPv4/IPv6 dual SIP server 1-2. Since the IP address of the SIP server 1-1 has been resolved, the IPv4/IPv6 dual SIP server 1-2 transfers the Invite (246) to the SIP server 1-1. The IPv4/IPv6 dual SIP server 1-1 replaces the IPv4 header with the IPv6 header and sends the Invite procedure (247) to the IPv4/IPv6 dual SIP terminal 5. At this time, the SIP server 1-1 does not perform the IPv4/IPv6 translation of the SIP payload portion.

As a result, the IPv4/IPv6 dual SIP terminal 5 receives a packet for the Invite procedure (247) in which IPv4/IPv6 protocols coexist in the SIP payload portion. This time, however, since the communication protocol for the main signals is the IPv4, the IPv4/IPv6 dual SIP terminal 5 returns (248) the 200 OK. The SIP server 1-2 replaces the IPv6 header with the IPv4 header and transfers (249) the 200 OK to the IPv4 SIP terminal 6 and the SIP terminal 6 returns the ACK (250, 251), whereby the session is established (252) with the IPv4 protocol.

According to the method, it is unnecessary to equip the IPv4 SIP terminal 6 with a function of protocol selection. Although it becomes necessary for the IPv4/IPv6 dual SIP terminal 5 to perform the function of communicating the main signals with each of the IPv4/IPv6 protocols, the function of communicating control signals according to the SIP can be realized by supporting only one of the protocols.

### [Embodiment 3]

FIG. 12 shows an embodiment in the case where an IPv4/IPv6 dual SIP terminal 5 according to the present invention and the IPv4 SIP terminal 6 perform communication therebetween.

In the present embodiment, the IPv4/IPv6 dual SIP terminal 5 and the IPv4/IPv6 dual SIP server 1 are connected to the IPv4/IPv6 dual network 10, while the IPv4 SIP terminal 6 and the IPv4 SIP server 2 are connected to the IPv4 network 11. A SIP server to which the IPv4/IPv6 dual SIP terminal 5 belongs, i.e., in which it is registered, is the IPv4/IPv6 dual SIP server 1 and a SIP server to which the IPv4 SIP terminal 6 belongs is the IPv4 SIP server 2. This configuration means that the two terminals are accommodated in the different SIP servers. A DNS server 4 and a DNS server 3 are used by the two SIP servers to resolve their partner's addresses respectively. In the present embodiment, the SIP server 1 uses the DNS server 4, while the SIP server 2 uses the DNS server 3. Although only two SIP servers are described in the present embodiment, three or more SIP servers may exist on the network. Although the individual SIP servers resolve the addresses by using the different DNS servers in the present embodiment, they may use the same DNS server.

### (Embodiment 3-1)

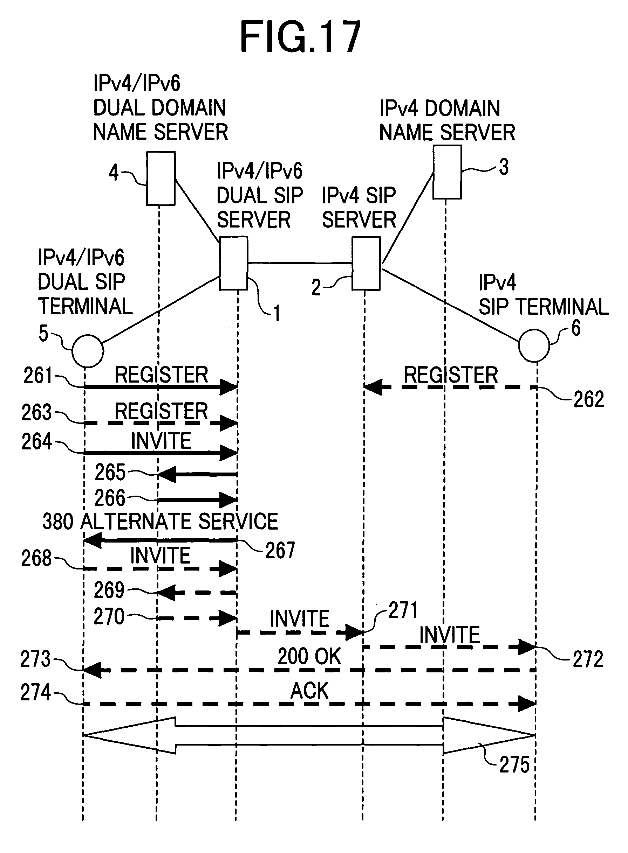

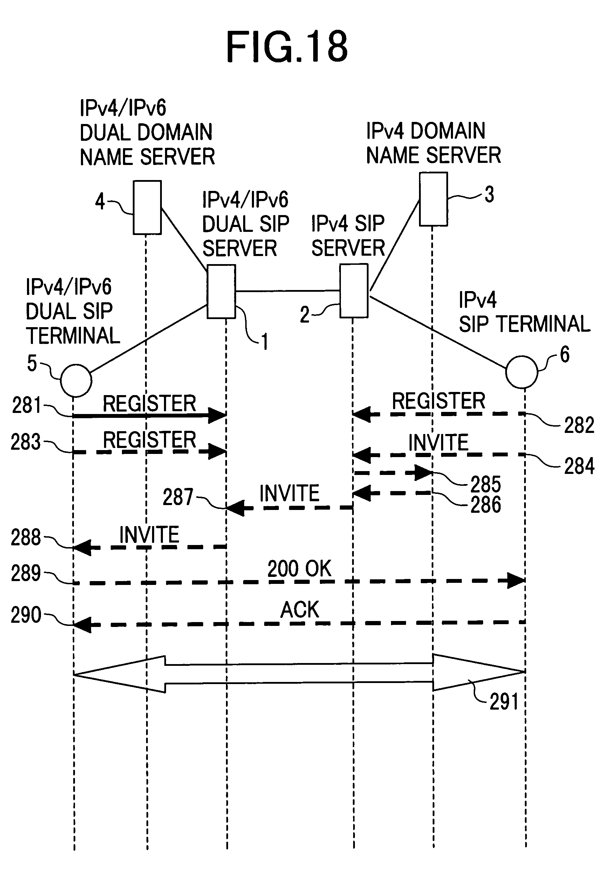

FIGS. 17 and 18 show an embodiment of a communication procedure in the case where the IPv4/IPv6 dual SIP terminal 5 according to the present invention and the IPv4 SIP terminal 6 perform communication therebetween in a network configuration shown in FIG. 12. FIG. 17 shows the sequence of a call from the IPv4/IPv6 dual SIP terminal 5 and FIG. 18 shows the sequence of a call from the IPv4 SIP terminal 6. In the drawings, the sequence indicated by the solid lines shows a communication procedure using IPv6 packets and the sequence indicated by the broken lines shows a communication procedure using IPv4 packets.

The present embodiment shows the case where the IPv4/IPv6 dual SIP terminal 5 and the IPv4 SIP terminal 6 perform registrations to the different IPv4/IPv6 dual SIP servers 1 and 2, respectively. The IPv4 SIP terminal 6 performs a registration to the IPv4 SIP server 2 using IPv4 registration procedure. The IPv4/IPv6 dual SIP terminal 5 according to the present embodiment performs a registration to the IPv4/IPv6 dual SIP server 1 in accordance with each of the IPv6 register procedure (261) and the IPv4 register procedure (26w) using each of the IPv4 and IPv6 protocols. This allows the IPv4/IPv6 dual SIP terminal 5 to be ready for establishing a session using each of the IPv4 and IPv6 protocols. This also allows the IPv4/IPv6 dual SIP server 1 to be ready for establishing a session using each of the IPv4 and IPv6 protocols for the TPv4/IPv6 dual SIP terminal 5.

When an Invite procedure (264) is performed from the SIP terminal 5, if it is recognized that the destination SIP terminal 6 is a terminal belonging to another domain and not registered in the IPv4/IPv6 dual SIP server 1 according to the present invention, the IPv4/IPv6 dual SIP server 1 inquires (265) the DNS server 4 of the IP address of a SIP server in the domain to which the destination SIP terminal 6 belongs. The DNS server 4 returns (266) the IP address of the SIP server 2 to the SIP server 1. The SIP server 1-1 having resolved the IP address of the SIP server 2 judges that the SIP server 3 accommodating the communication partner terminal supports the IPv4 and notifies (267) the IPv4/IPv6 dual SIP terminal 5 of the result of judgment. The present embodiment shows an example in which the notification (267) is performed by using the 380 Alternate Service procedure of the SIP protocol.

Upon receiving the notification from the IPv4/IPv6 dual SIP server 1, the terminal 5 performs the Invite procedure (268) again by using the protocol, which is the IPv4 in the present embodiment, communicable with the terminal 6. Subsequently, the Invite is transferred (271, 272) to the IPv4 SIP terminal 6 via the IPv4 SIP server 2 and the session is established (273-275) with the IPv4 protocol.

FIG. 18 shows an embodiment of a communication procedure in the case where the IPv4/IPv6 dual SIP terminal 5 according to the present invention and illustrated in FIG. 12 and the IPv4 SIP terminal 6 perform communication therebetween.

In the case of a call from the IPv4 terminal 6, the IPv4/IPv6 dual SIP terminal 5 can receive the call by using either of the IPv6 and IPv4 since the registration (281, 283) has been performed with each of the two protocols and a session can be established (284-291) with the IPv4 protocol.

According to the method, it is unnecessary to equip the IPv4 SIP terminal 6 with a function of protocol selection. Likewise, it is also unnecessary for IPv6 SIP terminals to equip with the function of protocol selection if they are accommodated in the network. Therefore, the method is particularly effective in the case of providing a service to SIP terminals including a terminal to which an existing service is offered by using a single protocol. In addition, the IPv4/IPv6 dual SIP terminal 5 and the IPv4/IPv6 dual SIP server 1 can perform a registration based on each of the IPv4 and IPv6 by performing the registration processes using each of the two protocols. This offers the advantage that execution of a mixed-protocol registration process involving the IPv4 and IPv6 is not necessary. In addition, it is able to interconnect an IPv4/IPv6 dual network with a network for providing a SIP service using a SIP server which supports only the IPv4.

### (Embodiment 3-2)

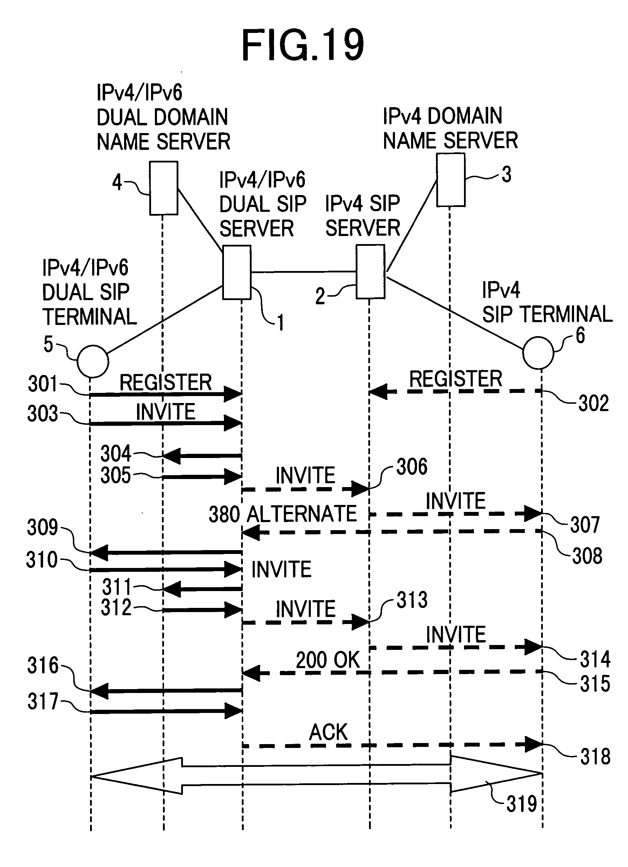

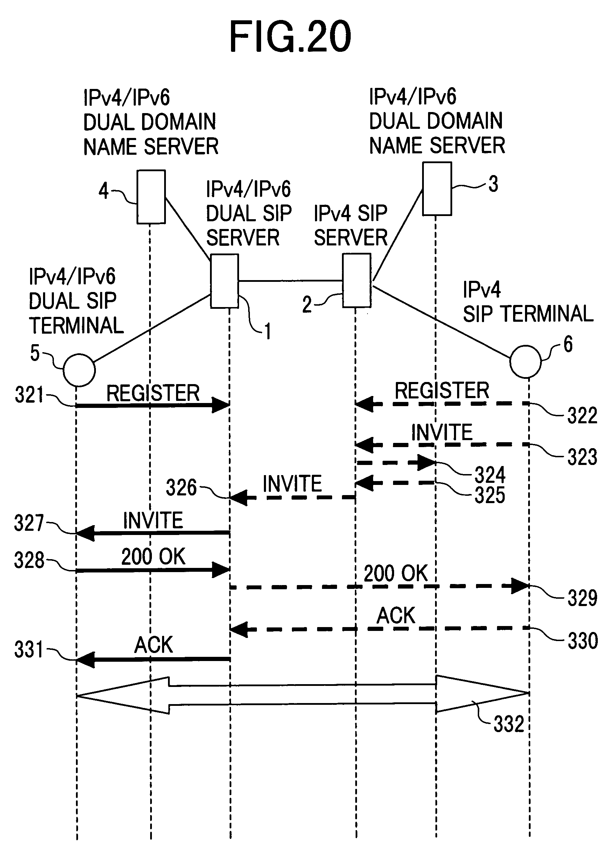

FIGS. 19 and 20 show an embodiment of a communication procedure in the case where the IPv4/IPv6 dual SIP terminal 5 according to the present invention and the IPv4 SIP terminal 6 perform communication therebetween in a network configuration shown in FIG. 12. FIG. 19 shows the sequence of a call from the IPv4/IPv6 dual SIP terminal 5 and FIG. 20 shows the sequence of a call from the IPv4 SIP terminal 6. In the drawings, the sequence indicated by the solid lines shows a communication procedure using IPv6 packets and the sequence indicated by the broken lines shows a communication procedure using IPv4 packets.

In the present embodiment, the IPv4/IPv6 dual SIP terminal 5 performs an IPv6-based registration (301) to the IPv4/IPv6 dual SIP server 1 and the IPv4 SIP terminal 6 performs an IPv4-based registration (302) to the IPv4 SIP server 2. When the Invite procedure (303) is performed from the terminal 5, if it is recognized that the destination SIP terminal 6 is a terminal belonging to another domain and not registered in the IPv4/IPv6 dual SIP server 1 according to the present invention, the IPv4/IPv6 dual SIP server 1 inquires (304) the DNS server 4 of the IP address of a SIP server in the domain to which the destination SIP terminal 6 belongs. The DNS server 4 returns (305) the IP address of the SIP server 2 to the SIP server 1. Since the IP address of the SIP server 2 has been resolved, the IPv4/IPv6 dual SIP server 1 replaces the IPv6 header 6 with the IPv4 header and transfers the Invite (306) to the IPv4 SIP server 2. At this time, the SIP server 2 does not perform the IPv4/IPv6 translation of the SIP payload portion. The SIP server 2 performs the Invite procedure (307) to the IPv4 SIP terminal 6.

As a result, the IPv4 SIP terminal 6 receives a packet for the Invite procedure (307) in which the IPv4/IPv6 protocols coexist in the SIP payload portion. However, the IPv4 SIP terminal 6 interprets it and returns a 380 Alternate Service (308) to notify that the IPv4 SIP terminal 6 performs communication using the IPv4. The IPv4/IPv6 dual SIP server 1 replaces the IPv4 header with the IPv6 header and transfers (309) the 380 Alternate Service to the IPv4/IPv6 dual SIP terminal 5. The IPv4/IPv6 dual SIP terminal 5 sends the Invite procedure (310) again by using the IPv4 as the communication protocol for the main signals.

When the Invite procedure (310) is sent from the IPv4/IPv6 dual SIP terminal 5 to the IPv4/IPv6 dual SIP server 1 after the IP address resolution (311, 312) , the SIP server 1 replaces the IPv6 header with the IPv4 header and performs the Invite procedure (313, 314) to the IPv4 SIP terminal 6. This time, since the communication protocol is the IPv4, the IPv4 SIP terminal 6 returns (315) the 200 OK. The SIP server 1 replaces the IPv6 header with the IPv4 header and transfers (316) the 200 OK to the IPv4/IPv6 dual SIP terminal 5 and the SIP terminal 5 returns the ACK (317, 318), whereby the session is established (319) with the IPv4 protocol.

FIG. 20 shows an embodiment of a communication procedure in the case where the IPv4/IPv6 dual SIP terminal 5 according to the present invention and illustrated in FIG. 12 and the IPv4 SIP terminal 6 perform communication therebetween.

In the present embodiment, the IPv4/IPv6 dual SIP terminal 5 performs an IPv6-based registration (321) to the IPv4/IPv6 dual SIP server 1 and the IPv4 SIP terminal 6 performs an IPv4-based registration (322) to the IPv4 SIP server 2. When the Invite procedure (323) is performed from the terminal 6, if it is recognized that the destination SIP terminal 5 is a terminal belonging to another domain and not registered in the IPv4 SIP server 2, the IPv4 SIP server 2 inquires (324) the IPv4/IPv6 dual DNS server 3 of the IP address of a SIP server in the domain to which the destination SIP terminal 5 belongs. The DNS server 3 returns (325) the IP address of the SIP server 1 to the SIP server 2. Since the IP address of the IPv4/IPv6 dual SIP server 1 has been resolved, the IPv4 SIP server 2 transfers the Invite procedure (326) to the IPv4/IPv6 dual SIP server 1. The IPv4/IPv6 dual SIP server 1 replaces the IPv4 header with the IPv6 header and performs the Invite procedure (327) to the IPv4/IPv6 dual SIP terminal 5. At this time, the SIP server 1 does not perform the IPv4/IPv6 translation of the SIP payload portion.

As a result, the IPv4/IPv6 dual SIP terminal 5 receives a packet for the Invite procedure (327) in which the IPv4/IPv6 protocols coexist in the SIP payload portion, and translates it. This time, since the communication protocol for the main signals is the IPv4, the IPv4/IPv6 dual SIP terminal 5 returns the 200 OK (328). The SIP server 1 replaces the IPv6 header with the IPv4 header and transfers (329) the 200 OK to the IPv4 SIP terminal 6. The IPv4 SIP terminal 6 returns the ACK (330). The ACK is transferred (331) to the SIP terminal 5, whereby the session is established (332) with the IPv4 protocol.

According to the method, it is unnecessary to equip the IPv4 SIP terminal 6 with a function of protocol selection. Although it becomes necessary for the IPv4/IPv6 dual SIP terminal 5 to perform the function of communicating the main signals by using each of the IPv4/IPv6 protocols, the function of communicating control signals according to the SIP can be performed by supporting only one of the protocols. In addition, it is able to interconnect a IPv4/IPv6 dual network with a network for providing a SIP service using a SIP server which supports only the IPv4.

### [Embodiment 4]

Each of the above embodiments describes the case where, when the IPv4 terminal has -performed the IPv4-based registration to the SIP server, the IPv4/IPv6 dual terminal to be the communication partner performs the Invite procedure by using the IPv6. However, the present invention is also applicable to the case of performing communication between the IPv4/IPv6 dual terminal and the IPv6 terminal. The present invention is also applicable to the case of performing communication between the IPv4/IPv6 dual terminals and to the case where different IP addresses have been registered.

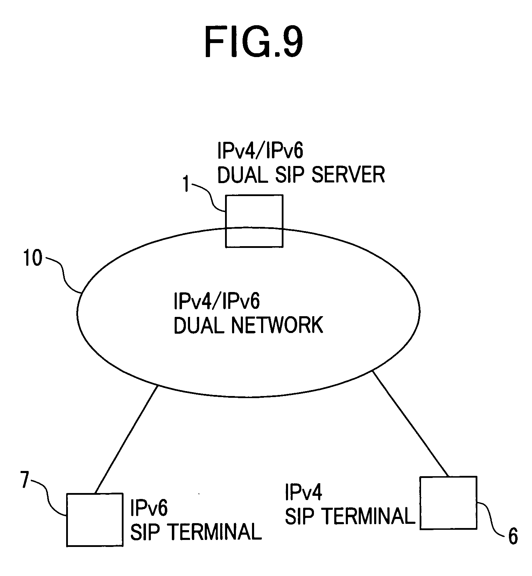

FIG. 9 shows an embodiment in the case where an IPv6 SIP terminal 7 and an IPv4 SIP terminal 6 perform communication therebetween. Since the IPv6 SIP terminal 7 and the IPv4 SIP terminal 6 use different IP protocols, the main signals cannot be communicated directly therebetween. However, communication of the SIP protocol can be realized if the IPv4/IPv6 dual SIP server 1 according to the present invention is applied and the PDU for the SIP protocol in each of the two terminals has a processing unit capable of treating the mixed IPv4/IPv6 protocols.

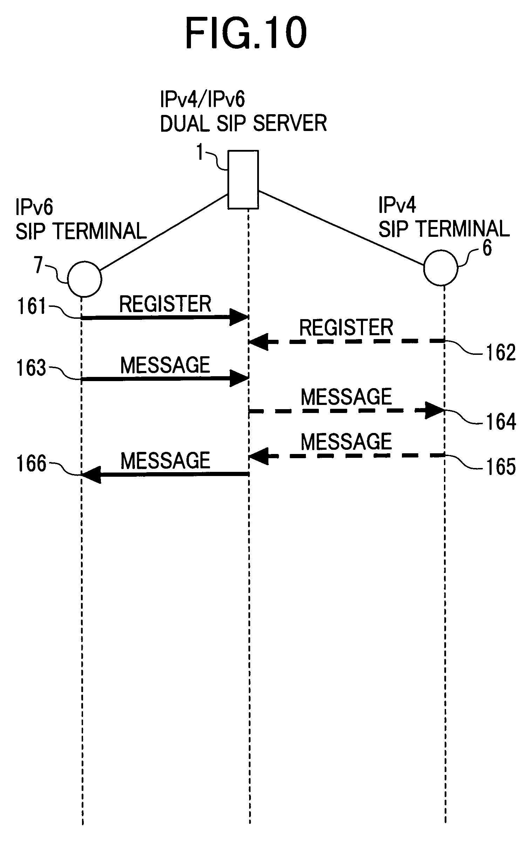

FIG. 10 shows an embodiment of a communication procedure for performing a chat by communicating message packets in the case where the IPv6 SIP terminal 7 according to the present invention and illustrated in FIG. 9 and the IPv4 SIP terminal 6 perform communication therebetween.

In the present embodiment, the IPv6 SIP terminal 7 performs an IPv6-based registration (161) to the IPv4/IPv6 dual SIP server 1, while the IPv4 SIP terminal 6 also performs an IPv4-based registration (162) to the same IPv4/IPv6 dual SIP server 1. In the case where a packet for chatting is transferred in accordance with a message procedure from the IPv6 SIP terminal 7 to the IPv4 SIP terminal 6, the IPv6 SIP terminal 7 transmits (163) the packet (Message) to the SIP server 1 by using the IPv6. The SIP server 1 replaces the IPv6 header with the IPv4 header and transfers (164) the message to the IPv4 SIP terminal 6. Conversely, when the IPv4 SIP terminal 6 transfers a packet for chatting to the IPv6 SIP terminal 7 in accordance with the message procedure, the IPv4 SIP terminal 6 transmits (165) the packet (Message) to the SIP server 1 by using the IPv4. The SIP server 1 replaces the IPv4 header with the IPv6 header and transfers (166) the message to the IPv6 SIP terminal 7. This enables the IPv6 SIP terminal 7 and the IPv4 SIP terminal 6 to perform a chat therebetween without using the IPv4/IPv6 translator or ALG.

The description has been given to a chat service as an example of a service which communicates information using only the SIP protocol , i.e., the main signals need not be used. Likewise, as another example of the service which communicates information by using only the SIP protocol, there is a presence information service using a Subscribe procedure, a Notify procedure, and the like. The latter service also allows the implementation of a service between the IPv4 SIP terminal 6 and an IPv6 presence server by merely preparing the IPv4/IPv6 dual SIP server with the function of interworking the IPv4 protocol and the IPv6 in accordance with the foregoing method.

According to the present invention, even when a communication partner is any of an IPv4 SIP terminal, an IPv6 SIP terminal and an IPv4/IPv6 communication terminal, it becomes possible for the IPv4/IPv6 communication terminal to call the communication partner and to be called from the communication partner. The present invention also allows communication between an IPv4 terminal and an IPv6 terminal in the case of exchanging information by using the SIP via a SIP server without involving direct communication between terminals, such as in the case of communicating instant messaging and presence information, or the like.

## Claims

1. A session control system (1, 600 - 660) comprising:
a control unit (605) for performing a process of establishing a session between communication terminals (5 - 7) connected to an IP network (10, 11);
a receiving unit (600 - 604) for receiving, from a first communication terminal, a session control request packet to a second communication terminal; and
a transmitting (606 - 610) unit for transmitting a notification to said first communication terminal if an IP protocol version of said session control request packet is different from an IP protocol version usable by said second communication terminal.

2. A session control system according to claim 1, wherein said receiving unit accepts a registration of the IPv4 and a registration of the IPv6.

3. A session control system according to claim 1, wherein said receiving unit receives a packet having each of registration information for an IPv4 terminal and registration information for an IPv6 terminal.

4. A session control system according to claim 3, wherein the packet having said registration information is an IPv4 packet or an IPv6 packet.

5. A session control system (1, 600 - 660) comprising:
a control unit (605) for performing a process of establishing a session between communication terminals (5 - 7) connected to an IP network (10, 11);
a receiving unit (600 - 604) for receiving, from a first communication terminal, a session control request packet to be transfer to a second communication terminal; and
a transmitting unit (606 - 610) for transmitting, if an IP protocol version of said session control request packet is different from an IP protocol version usable by said second communication terminal, a packet obtained by converting an IP header of said session control request packet to the IP protocol usable by said second communication terminal.

6. A communication terminal (5 - 7, 700 - 758) connected to a session control system (1, 600 - 660) via an IP network (10, 11) and capable of communication using the IPv4 protocol and communication using the IPv4 protocol and communication using the IPv6 protocol, comprising:
a transmitting unit (700 - 704) for transmitting to said session control system, by using the IPv4 or IPv6 protocol, a session control request for requesting a session control to a communication terminal to be a communication partner; and
a receiving unit (707 - 711) for receiving a notification indicating that the communication protocol used for said session control request is different from a communication protocol communicable with the communication terminal to be said communication partner, wherein
upon receiving the notification, a session control request for requesting a session control to the partner communication terminal is transmitted again by using a communication protocol communicable with the partner communication terminal.

7. A communication terminal according to claim 6, wherein said transmitting unit transmits registration packets to said session control system by using each of an IPv4 packet and an IPv6 packet.

8. A communication terminal (5 - 7, 700 - 758) according to claim 6, wherein said transmitting unit transmits to said session control system a registration packet in which both of registration information for an IPv4 terminal and registration information for an IPv6 terminal is described.

9. A communication terminal according to claim 8, wherein the registration packet including said registration information is either an IPv4 packet or an IPv6 packet.

10. A communication terminal (5 - 7, 700 - 758) capable of communication using a first communication protocol with another communication terminal to be a communication partner connected via an IP network (10, 11), comprising:
a receiving unit (700 - 704) for receiving a session establishment request transmitted from said another communication terminal; and
a transmitting unit (707 - 711) for transmitting to said another communication terminal, if the session requested to establish uses a communication protocol other than the first communication protocol, a notification indicating that the session should be established by using said first communication protocol.

11. A network system comprising an IP network (10, 11), first and second communication terminals (5 - 7) each connected to the IP network, and a session control system (1, 600 - 660) connected to the IP network, wherein
said first communication terminal has a transmitting unit (707 - 711) capable of transmitting a session control request to said second communication terminal by using each of an IPv4 packet and an IPv6 packet, and
said session control system is comprised of:
a session control unit (605) for establishing a session between said first and second communication terminals;
a receiving unit (600 - 604) for receiving the session control request transmitted from said first communication terminal; and
a transmitting unit (606 - 610) for transmitting to said first communication terminal, if an IP protocol version of said session control request is different from an IP protocol version usable by the second communication terminal, a notification indicating that the IP protocols are different.

12. A network system according to claim 11, wherein the
transmitting unit of said first communication terminal transmits registration packets to said session control system by using each of an IPv4 packet an IPv6 packet, and
the receiving unit of said session control system accepts both of the registration packets transmitted from said first communication terminal.

13. A network system according to claim 11, wherein
the transmitting unit of said first communication terminal transmits to said session control system a registration packet in which each of registration information for an IPv4 terminal and registration information for an IPv6 terminal is described, and
the receiving unit of said session control system accepts the packet including said registration information and transmitted from said first communication terminal.

14. A network system according to claim 13, wherein the packet including said registration information is either an IPv4 packet or an IPv6 packet.

15. A network system comprising an IP network (10, 11), first and second communication terminals (5 - 7) each connected to the IP network, and a session control system (1, 600 - 660) connected to the IP network, wherein
said first communication terminal has a transmitting unit (707 - 711) capable of transmitting a session control request to said second communication terminal by using each of an IPv4 packet and an IPv6 packet and
said session control system is comprised of:
a session control unit (605) for establishing a session between said first and second communication terminals;
a receiving unit (600 - 604) for receiving a session control request packet transmitted from said first communication terminal; and
a transmitting unit (606 - 610) for transmitting, if an IP protocol version of said session control request packet is different from an IP protocol version usable by the second communication terminal, a packet obtained by converting an IP header of the session control request packet to an IP protocol usable by said second communication terminal.

16. A server connected to a first terminal, which is capable of transmitting and receiving both of a command corresponding to a first communication protocol and a command corresponding to a second communication protocol, and to a second terminal capable of transmitting and receiving either one of a command corresponding to said first communication protocol and a command corresponding to said second communication protocol, comprising:
a receiving unit for receiving a command transmitted from said first terminal to said second terminal;
a judging unit for judging whether said received command is a command communicable with said second terminal; and
a transmitting unit for transmitting, if it is judged in said judging unit that said received command is not of a protocol communicable with said second terminal, a command notifying said first terminal of the result of the judgment.

17. A terminal (5 - 7, 700 - 758) connected to a communication partner terminal capable of transmitting and receiving either one of a command corresponding to a first communication protocol and a command corresponding to a second communication protocol via a server, comprising:
a transmitting unit (707 - 711) capable of transmitting a command corresponding to said first communication protocol and a command corresponding to said second communication protocol; and
a receiving unit (700 - 704) for receiving from said server, a notification indicating that the command transmitted from said transmitting unit is different from the command communicable with said communication partner terminal.
